# EUROPÄISCHE PATENTANMELDUNG

(11) **EP 1 862 340 A2**
(43) Veröffentlichungstag der Anmeldung: **05.12.2007**
(21) Anmeldenummer: 07109245.6
(22) Anmeldetag: 30.05.2007
(51) Int. Cl.: B60J 5/10, B60J 7/04, B60J 7/16

(54) **Mit einer Flügeltür ausgestattete Rückwand eines Lastfahrzeugs**

(30) Priorität: 30.05.2006 DE 202006008675 U
(71) Anmelder: Schmitz Cargobull AG, 48341 Altenberge (DE)
(72) Erfinder: Eikerling, Frank, 48149 Münster (DE); Merker, Heinrich, 48493 Wettringen (DE)
(74) Vertreter: Tarvenkorn, Oliver

(57) **Zusammenfassung**

Eine mit einer Flügeltür (1) ausgestattete Rückwand (100) eines Lastfahrzeugs, dessen Aufbau ein höhenverstellbares Dach mit einer eine Dachabdeckung tragenden, starren Rahmenkonstruktion aufweist, umfasst zwei Dachlängsträger (5) und einen die Rückwand (100) nach oben abschließenden Querträger (6), der auf höhenverstellbaren Eckrungen (3) aufliegt und zusammen mit den Enden der beiden Dachlängsträger (5) aus einer unteren Position nach oben anhebbar ist. Ein zu der Flügeltür gehörende Türflügel (2), der an einer Eckrunge (3) höhenkonstant angeschlagen ist, ist mit wenigstens einem Türsicherungselement auf seiner oberen Kante versehen, das mit einem verstellbare Riegelfinger (20.1, 20.2) ausgestattet ist. Der Querträger (6) ist mit einer nach unten hängenden, starren Schürze (10) verbunden, die unmittelbar hinter der Innenseite des Türflügels (2) über die Breite der Flügeltür verläuft und mit höhenversetzten Aufnahmevertiefungen versehen ist, in denen Zapfen angeordnet sind, die von den Riegelfingern (20) in entsprechenden Positionen des Querträgers (6) umfasst werden können.

## Beschreibung

Die Erfindung betrifft eine mit einer Flügeltür ausgestattete Rückwand eines Lastfahrzeugs, dessen Aufbau ein höhenverstellbares Dach mit einer eine Dachabdeckung tragenden, starren Rahmenkonstruktion aufweist, die zwei Dachlängsträger und einen die Rückwand nach oben abschließenden Querträger umfasst, der auf höhenverstellbaren Eckrungen aufliegt und zusammen mit den Enden der beiden Dachlängsträger aus einer unteren Position nach oben in eine oder mehrere angehobene Positionen anhebbar ist, und mit wenigstens einem, zu der Flügeltür gehörenden Türflügel, der an einer Eckrunge höhenkonstant angeschlagen ist, wobei der Türflügel mit wenigstens einem Türsicherungselement auf seiner oberen Kante versehen ist, das mit einem verstellbare Riegelfinger ausgestattet ist, und mit einer im Bereich des Querträgers angeordneten, gegenüber dem Riegelfinger kompatiblen Aufnahmevorrichtung, in die der Riegelfinger zur Verriegelung des Türflügels einführbar ist.

Die im folgenden verwendetet räumlichen Begriffe, wie »oben«, »unten«, »vertikal«, »horizontal«, »nach hinten« und ähnliche, beziehen sich auf den normalen Fahrzustand des Lastfahrzeugs, wie er auch in den Figuren zugrunde gelegt ist.

Es stellt sich die Aufgabe, eine solche mit einer Flügeltür ausgestatte Rückwand mit einer gut abdichtbaren Verbindung zu den genannten Türsicherungselementen auszustatten. Dabei wird vorausgesetzt, dass es sich bei der Flügeltür vorzugsweise um eine zweiflügelige Tür handelt.

Die vorgenannte Aufgabe wird gelöst durch eine Rückwand, bei der Querträger mit einer nach unten hängenden, starren Schürze verbunden ist, die unmittelbar hinter der Innenseite des Türflügels über die Breite der Flügeltür verläuft und mit höhenversetzten Aufnahmevertiefungen versehen ist, in denen Zapfen angeordnet sind, die von den Riegelfingern in entsprechenden Positionen des Querträgers umfasst werden können.

Die Bedienungssicherheit wird erhöht, wenn der Riegelfinger mit einer über die Türhöhe reichenden Schwenkwelle verbunden ist, die an ihrem unteren Ende eines schwenkbaren Handhebels trägt, der mit einer Türsicherung unterhalb des Türflügels zu verbinden ist.

Die Konstruktion der Außenvorrichtungen wird dadurch vereinfacht, dass eine Zapfenstange durch mehrere, vorzugsweise sämtliche, in einer Reihe übereinander liegende Aufnahmevertiefungen verläuft und darin jeweils den Zapfen bildet.

Vorzugsweise wird die Schürze aus einem tiefgezogenen Metallblech hergestellt. Die einzelnen Aufnahmevertiefungen sind vorzugsweise allseitig - außer auf ihrer Zugangsseite - geschlossen.

Im Bereich der Oberkante der Türflügel sind vorzugsweise Dichtungsstreifen angebracht, die die Oberkante wenigstens gegenüber der Stirnkante der Aufnahmevertiefung abdichten.

Besonders einfach lässt sich die Schürze gestalten, wenn diese mit wenigstens einer im Wesentlichen über ihre Breite reichenden Sicke, vorzugsweise Kastensicke, versehen ist, in der die Zapfen angeordnet sind. Der Dichtungsstreifen kann dann als Dichtungsprofil gestaltet sein und über die gesamte Länge der Sicke reichen.

Vorzugsweise ist für jede der höhenversetzten Aufnahmepositionen eine Sicke zur Herstellung der Aufnahmevertiefungen vorgesehen. Insbesondere vorteilhaft ist, wenn die Schürze aus einem kastenartig gesickten Wellblech besteht. Die nicht gesickten Bereiche der Schürze bilden vorzugsweise eine Ebene, so dass hier eine uniforme Dichtung einen ununterbrochenen Anlagebereich findet.

Weitere Merkmale der Unteransprüche werden anhand der Beschreibung eines gezeichneten Ausführungsbeispiels erläutert.

Die Figuren der Zeichnung zeigen im Einzelnen:
- Figur 1: eine mit einer Flügeltür ausgestattete Rückwand eines Lastfahrzeuges, bei der von der zweiflügeligen Tür nur ein Türflügel dargestellt ist;
- Figur 2: ein Detail der Figur 1 im Bereich der Oberkante der Tür;
- Figur 3: einen Schnitt durch die Oberkante des Verbindungsbereichs von Flügeltür und Rückwand, bei tief gestelltem Verdeck;
- Figur 4: einen Schnitt durch die Oberkante ähnlich wie Figur 3, jedoch mit hochgestelltem Verdeck.

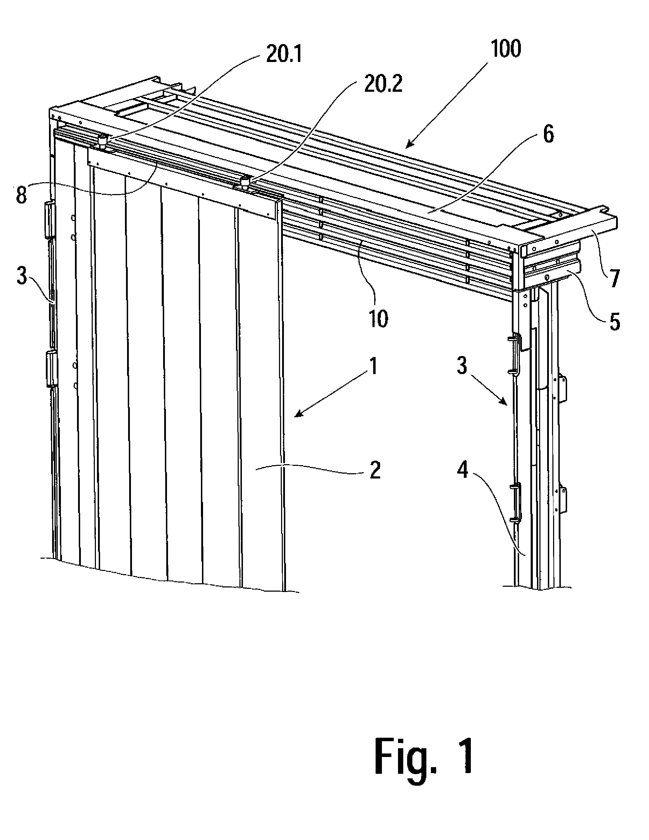

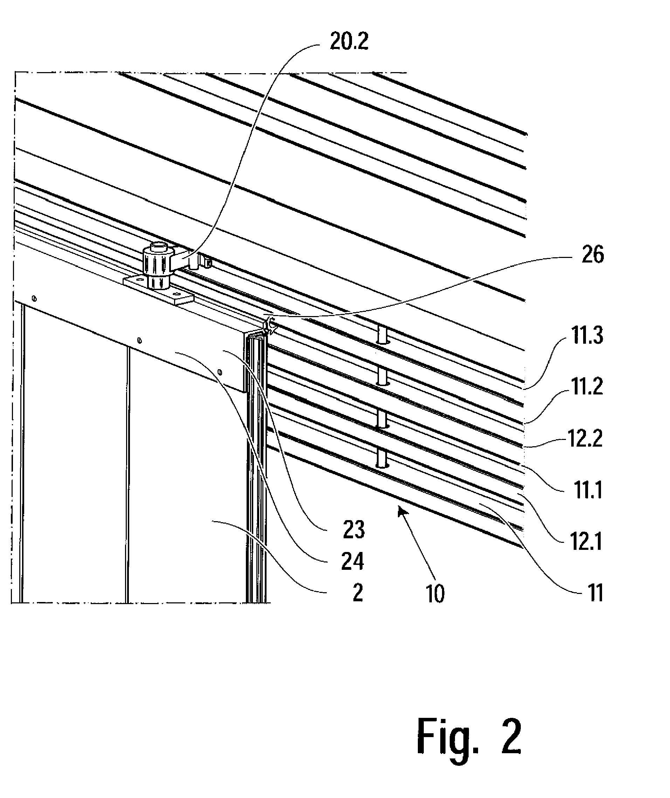

In den Figuren 1 und 2 sind Details einer Rückwand 100 eines Lastfahrzeugs, insbesondere eines Aufliegeanhängers, dargestellt. Die Rückwand 100 ist mit einer Flügeltür 1 ausgerüstet, die über zwei Türflügel 2 verfügt, von denen nur der linke dargestellt ist. Der Türflügel 2 ist an einer Eckrunge 3 über entsprechende Gelenke schwenkbar angeschlagen. Die Eckrunge 3 ist höhenverstellbar und besteht aus einer Basisrunge 4 mit einem Schiebling (nicht dargestellt), der in der Basisrunge verschoben werden kann. Der Kopf des Schieblings trägt das Ende eines Dachlängsträgers 5, der im Ausführungsbeispiel gemäß Figur 1 das Endstück 7 eines Schiebeplanensystems für die Dachplane (nicht dargestellt) umfasst.

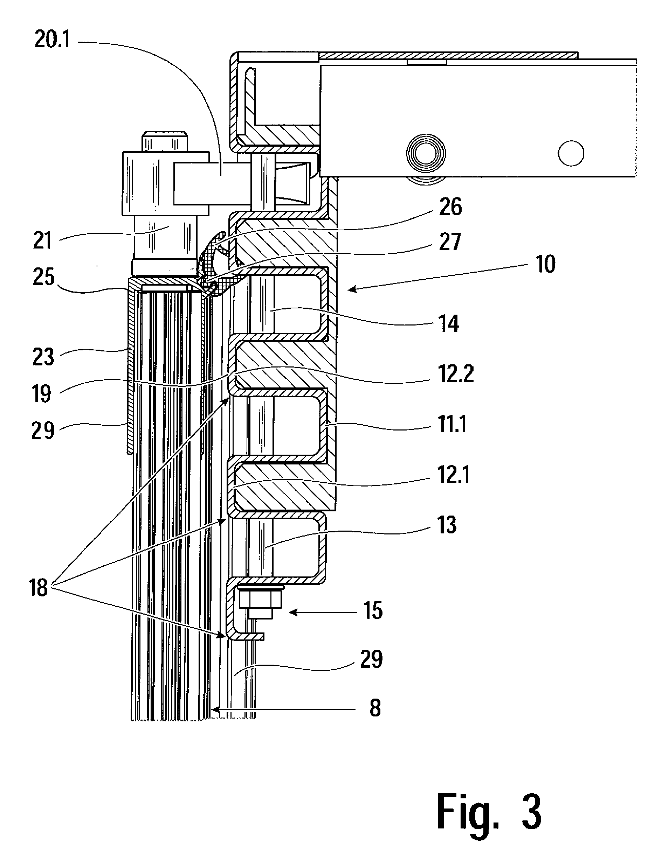

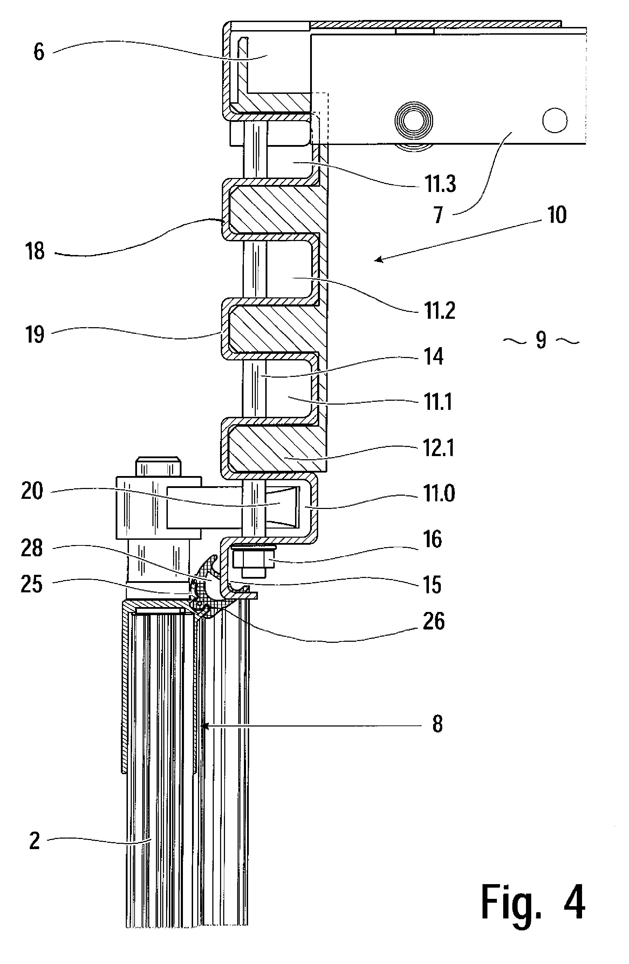

Über die Breite der Rückwand 100 erstreckt sich ein nach oben abschließender Querträger 6, der damit indirekt auf den beiden höhenverstellbaren Eckrungen 3 aufliegt und zusammen mit den Enden der beiden Dachlängsträger 5 aus einer unteren Position, wie in den Figuren 1 und 3 dargestellt, in eine oder mehrere angehobene Positionen nach oben anhebbar ist (vergleiche Figur 4). Dabei bilden die Eckrungen 3 rechts und links die Seitenbegrenzung der Rückwand 100. Die Oberkante 8 des Türflügels 2 hält auch in der tiefsten Stellung des Daches einen geringen Abstand gegenüber der Unterkante des Querträgers 6.

Die Basisrunge 4 ist mit festgelegten Anschlagpositionen des Schieblings gegenüber der Basisrunge 4 versehen. Die Anschlagpositionen sind durch Bohrungen in der Basisrunge gebildet, in die ein Anschlagzapfen einschiebbar ist, auf dem die Unterkante des Schieblings jeweils rastet (hier nicht weiter dargestellt).

Der Querträger 6 ist nach unten mit einer hängenden, starren Schürze 10 verbunden, die bei geschlossenem Türflügel 2 unmittelbar hinter dessen Innenseite 8 verläuft und etwa eine Höhe von 200 mm hat, gemessen von der Unterkante des Querträgers 6 bis zur Unterkante der Schürze 10. Die Schürze 10 besteht aus pulverbeschichtetem, kastenartig gesicktem Stahlblech. Ihr Querschnitt ist aus den Figuren 3 und 4 zu erkennen. Es ist auch möglich, andere Materialien für die Schürze einzusetzen, z. B. Aluminium-Blech oder einen hochfesten Kunststoff.

Die Sicken 11.0, 11.1, 11.2, ... der Schürze 10 bilden zum Laderaum 9 des Fahrzeugs hin geschlossene, vertiefte Bereiche mit einer Tiefe von etwa 70 mm. Untereinander, über die Höhe der Schürze haben die Sicken 11 einen Abstand von etwa 50 mm, gemessen von Mitte zu Mitte. Die Kanten 18 der Sicken 11 sind gerundet, wie aus den Figuren 3 und 4 hervorgeht.

Durch die Sicken 11 und die Vorsprünge 12 der Schürze 10 ist vertikal eine Stange 13 hindurch gesteckt, die in allen Sicken als frei liegender Zapfen 14 erscheint. An der Unterseite der Schürze 10 ist diese bei 15 C-förmig abgebogen und nimmt in dem dadurch entstandenen Hohlraum das Gewindeende 16 der Stange 13 mit einer Mutter 16 auf.

Die Zapfen 14 innerhalb der Sicken 11 bilden Aufnahmevorrichtungen, in die Riegelfinger 20 zur Verriegelung des Türflügels 2 einführbar sind. Jeder Türflügel 2 ist oberhalb seiner Oberkante mit zwei Riegelfingern 20.1, 20.2 als Türsicherungselement versehen. Die Riegelfinger 20.1; 20.2 sind fest mit einer vertikalen Welle 21 verbunden, die über die gesamte Türhöhe reicht und die an ihren unteren Enden einen schwenkbaren Handhebel trägt, mit dem eine Türsicherung unterhalb des Türflügels zu verbinden ist (hier nicht dargestellt). Wird die Welle 21 zusammen mit dem Handhebel gedreht, so dreht sich auch der Riegelfinger 20 und schwenkt in eine der Aufnahmevorrichtungen, die sich innerhalb der Sicken befinden und umfasst den Zapfen 14. Dabei wird eine Position eingenommen, die der jeweiligen Höhe des Dachbereiches oberhalb der Eckrungen entspricht.

Die Abdichtung der Schürze 10 gegenüber dem Türflügel 2 ist bei jeder Positionen des Türflügels im verriegelten Zustand zu gewährleisten. Die Oberkante des Türflügels ist daher mit einem Rahmenprofils 23 versehen, das die Kante einfasst und zur Türaußenseite hin in ein Befestigungsschild 29 ausläuft. Zur Innenseite hin trägt das Rahmenprofils 23 eine nach außen offene Halteschiene 25, in der ein elastisches Dichtungsprofil 26 mit einem Haltekopf 27 eingesetzt ist. Das Dichtungsprofil 26 hat einen weichen Profilkorpus 28, der im Wesentlichen als ein Hohlkammerprofil gestaltet ist. Die gerundeten Kanten 18 der Sickenvorsprünge 12 dienen als Anlage für den Profilkorpus 28 des Dichtungsprofils 26. Sämtliche Kanten 18 und die sie verbindenden Außenseiten 19 liegen in gleicher Position beziehungsweise in derselben Ebene gegenüber der Türflügel-Rückseite, so dass in der jeweiligen Positionen unabhängig von der Höhe der Schürze 10 sich dieselbe Konfigurationen des Dichtungsprofils 26 gegenüber der Sicken 11 und der Kante 18 einstellt. Damit ist in jeder inkrementalen Stellung eine ausreichende Dichtungswirkung gegeben. Selbstverständlich sind auch die Außenseiten des Türflügels entsprechend durch ein seitliches Dichtungsprofil 29 abgedichtet. Das seitliche Dichtungsprofil 29 und das Dichtungsprofil 26 an der Oberkante haben den gleichen Querschnitt.

Die Schürze 10 ist vorzugsweise aus einem kastenartig gesickten Wellblech hergestellt. Davon abweichend kann die Schürze 10 auch mit seitlich geschlossenen Mehrfachsicken hergestellt sein. Statt einer Kastensicke kann auch eine Trapez- oder Halbrundsicke eingebracht werden (vergleiche zu den Begriffen HIERSIG, Lexikon Produktionstechnik/Verfahrenstechnik, VDI-Verlag, 1995, Figur Seite 964). Auch können die Aufnahmevertiefungen geschlossene, gesenkte Vertiefungen sein. Letztlich lässt sich ein Zapfen 14 auch direkt aus dem Schürzenmaterial durch einen Stanz-, Biege- und Senkvorgang ohne zusätzliche Stange erstellen.

Die Schürze 10 kann auch an ihren Seiten geführt sein und so gegenüber dem Querträger höheverstellbar und in wenigstens einer weiteren Vertikalposition festgelegt sein.

Eine Hinterlegung der Schürze mit einem Dichtungs- oder Dämmpaneel ist allerdings in diesen Fällen aus Dichtungsgründen erforderlich.

Insgesamt ergibt sich mit dem neuartigen Flügeltür-Schürzensystem eine gute Lösung für die Abdichtung und Sicherung bei Lastfahrzeugen mit Hubdächern.

## Patentansprüche

1. Mit einer Flügeltür (1) ausgestattete Rückwand (100) eines Lastfahrzeugs, dessen Aufbau ein höhenverstellbares Dach mit einer eine Dachabdeckung tragenden, starren Rahmenkonstruktion aufweist, die zwei Dachlängsträger (5) und einen die Rückwand (100) nach oben abschließenden Querträger (6) umfasst, der auf höhenverstellbaren Eckrungen (3) aufliegt und zusammen mit den Enden der beiden Dachlängsträger (5) aus einer unteren Position nach oben in eine oder mehrere angehobene Positionen anhebbar ist, und mit wenigstens einem, zu der Flügeltür gehörenden Türflügel (2), der an einer Eckrunge (3) höhenkonstant angeschlagen ist, wobei der Türflügel (2) mit wenigstens einem Türsicherungselement auf seiner oberen Kante versehen ist, das mit einem verstellbare Riegelfinger (20) ausgestattet ist, und mit einer im Bereich des Querträgers angeordneten, gegenüber dem Riegelfinger kompatiblen Aufnahmevorrichtung, in die der Riegelfinger zur Verriegelung des Türflügels einführbar ist,
**dadurch gekennzeichnet, dass** der Querträger (6) mit einer nach unten hängenden, starren Schürze (10) verbunden ist, die unmittelbar hinter der Innenseite des Türflügels (2) über die Breite der Flügeltür verläuft und mit höhenversetzten Aufnahmevertiefungen versehen ist, in denen Zapfen (14) angeordnet sind, die von den Riegelfingern (20) in entsprechenden Positionen des Querträgers (6) umfasst werden können.

2. Mit einer Flügeltür ausgestattete Rückwand nach Anspruch 1, **dadurch gekennzeichnet, dass** der Riegelfinger mit einer über die Türhöhe reichenden Welle (21) verbunden ist, die an ihrem unteren Ende eines schwenkbaren Handhebels trägt, der mit einer Türsicherung unterhalb des Türflügels (2) zu verbinden ist.

3. Mit einer Flügeltür ausgestattete Rückwand nach Anspruch 1 oder 2, **dadurch gekennzeichnet, dass** eine Zapfenstange (13) durch mehrere, vorzugsweise sämtliche, in einer Reihe übereinander liegende Aufnahmevertiefungen verläuft und darin jeweils den Zapfen (14) bildet.

4. Mit einer Flügeltür ausgestattete Rückwand nach Anspruch 1 bis 3, **dadurch gekennzeichnet, dass** die Schürze aus einem tiefgezogenen Metallblech hergestellt ist.

5. Mit einer Flügeltür ausgestattete Rückwand nach Anspruch 1, **dadurch gekennzeichnet, dass** die Aufnahmevertiefung allseitig - außer auf ihrer Zugangsseite - geschlossen ist.

6. Mit einer Flügeltür ausgestattete Rückwand nach einem der vorhergehenden Ansprüche, **dadurch gekennzeichnet, dass** im Bereich der Oberkante der Türflügel Dichtungsstreifen (26) angebracht sind, die die Oberkante wenigstens gegenüber der Stirnkante der Aufnahmevertiefung abdichten.

7. Mit einer Flügeltür ausgestattete Rückwand nach einem der vorhergehenden Ansprüche, **dadurch gekennzeichnet, dass** die Schürze (10) mit wenigstens einer, im Wesentlichen über ihre Breite reichenden Sicke (11), vorzugsweise Kastensicke, versehen ist, in der die Zapfen (14) angeordnet sind.

8. Mit einer Flügeltür ausgestattete Rückwand nach Anspruch 6 und 7, **dadurch gekennzeichnet, dass** der Dichtungsstreifen als Dichtungsprofil gestaltet ist und über die gesamte Länge der Sicke reicht.

9. Mit einer Flügeltür ausgestattete Rückwand nach einem der vorhergehenden Ansprüche, **dadurch gekennzeichnet, dass** für jede der höhenversetzten Aufnahmepositionen eine Sicke (11.1,11.2, ...) zur Herstellung der Aufnahmevertiefungen vorgesehen ist.

10. Mit einer Flügeltür ausgestattete Rückwand nach einem der vorhergehenden Ansprüche, **dadurch gekennzeichnet, dass** die Schürze (10) aus einem kastenartig gesickten Wellblech besteht.

11. Mit einer Flügeltür ausgestattete Rückwand nach einem der vorhergehenden Ansprüche, **dadurch gekennzeichnet, dass** die nicht gesickten Bereiche der Schürze (10) eine Ebene bilden, so dass hier eine uniforme Dichtung einen ununterbrochenen Anlagebereich findet.

12. Mit einer Flügeltür ausgestattete Rückwand nach einem der vorhergehenden Ansprüche, **dadurch gekennzeichnet, dass** die Schürze an ihren Seiten geführt ist und gegenüber dem Querträger (6) höhenverstellbar sowie in wenigstens einer Vertikalposition festlegbar ist.

13. Mit einer Flügeltür ausgestattete Rückwand nach einem der vorhergehenden Ansprüche, **dadurch gekennzeichnet, dass** die Schürze mit einem Dichtungs- oder Dämmpaneel hinterlegt ist.

14. Mit einer Flügeltür ausgestattete Rückwand nach einem der vorhergehenden Ansprüche, **dadurch gekennzeichnet, dass** die höhenverstellbaren Eckrungen (3) aus einer Basisrunge (4) mit einem Schiebling bestehen, und dass die Basisrunge mit festgelegten Anschlagpositionen des Schieblings gegenüber der Basisrunge versehen ist, deren vertikale Abstände den vertikalen Abständen der Aufnahmepositionen entsprechen.

15. Mit einer Flügeltür ausgestattete Rückwand nach Anspruch 14, **dadurch gekennzeichnet, dass** die Anschlagpositionen durch Bohrungen gebildet sind, in die ein Anschlagzapfen einschiebbar ist.
